(19)

**Europäisches Patentamt**
**European Patent Office**
**Office européen des brevets**

(11) **EP 4 394 599 A1**

(12) **EUROPÄISCHE PATENTANMELDUNG**

(43) Veröffentlichungstag:
   **03.07.2024 Patentblatt 2024/27**

(21) Anmeldenummer: **23150010.9**

(22) Anmeldetag: **02.01.2023**

(51) Internationale Patentklassifikation (IPC):
   **G06F 9/54** *(2006.01)*

(52) Gemeinsame Patentklassifikation (CPC):
   **G06F 9/542**

(84) Benannte Vertragsstaaten:
   **AL AT BE BG CH CY CZ DE DK EE ES FI FR GB
   GR HR HU IE IS IT LI LT LU LV MC ME MK MT NL
   NO PL PT RO RS SE SI SK SM TR**
   Benannte Erstreckungsstaaten:
   **BA**
   Benannte Validierungsstaaten:
   **KH MA MD TN**

(71) Anmelder: **Siemens Aktiengesellschaft**
   **80333 München (DE)**

(72) Erfinder: **Sedlacek, Matous**
   **84034 Landshut (DE)**

(74) Vertreter: **Siemens Patent Attorneys**
   **Postfach 22 16 34**
   **80506 München (DE)**

(54) **VERFAHREN ZUM BETREIBEN VON DATENZENTRISCHEN APPLIKATIONEN IN EINEM GERÄTENETZWERK UND COMPUTERPROGRAMM**

(57) Bei dem Verfahren zum Betreiben von datenzentrischen Applikationen (APP) in einem Gerätenetzwerk (GENW) werden Datenflüsse der einen oder mehreren datenzentrischen Applikationen (APP) mittels einer Zuordnung auf Datenflüsse (TSNS) der Geräte (10, 20) des Gerätenetzwerks (GENW) abgebildet und es werden abhängig von den Anforderungen an die Datenflüsse der einen oder mehreren datenzentrischen Applikationen (APP) Anforderungen an die Datenflüsse zwischen den Geräte (10, 20) des Gerätenetzwerks (GENW) festgelegt und Geräte (10, 20) des Gerätenetzwerks werden zur Erfüllung der Anforderungen konfiguriert und mittels der konfigurierten Geräte werden die eine oder mehreren datenzentrischen Applikationen (APP) betrieben.

Das Computerprogrammprodukt ist ausgebildet zur Ausführung der Schritte eines Verfahrens wie oben beschrieben dann, wenn das Computerprogrammprodukt auf einem Computer läuft.

FIG 1

**Beschreibung**

Unabhängig vom grammatikalischen Geschlecht eines bestimmten Begriffes sind Personen mit männlicher, weiblicher oder anderer Geschlechteridentität mit umfasst.

Die Erfindung betrifft ein Verfahren zum Betreiben von datenzentrischen Applikationen in einem Gerätenetzwerk und Computerprogramm.

Im Bereich des industriellen Internets der Dinge werden zunehmend datenzentrische und schwach gekoppelte Systeme in Gestalt von Gerätenetzwerken genutzt, in denen Geräte brokerlos mittels Publish-Subscribe-Verfahren kommunizieren.

Ein prominentes Beispiel ist die Verwendung des DDS-Standards (DDS = engl. "Data Distribution Service") der Object Management Group (OMG).

Diese Publish-Subscribe-Verfahren erlauben über die Konfiguration von Datenfluss-Qualitäten die Konfiguration von spezifischen Eigenschaften für jeden einzelnen Datenfluss zwischen Endpunkten. Solche Datenfluss-Qualitäten sind etwa Latenzanforderungen und/oder Zuverlässigkeiten und/oder eine Persistenz auf Seiten der publizierenden oder der abonnierenden Endpunkte.

Es existieren zahlreiche Anwendungsfälle, bei welchen Datenfluss-Qualitäten von Datenflüssen notwendig sind, insbesondere in den Bereichen der Industrieautomatisierung, von SCADA oder des Militärs.

Hier müssen Endpunkte garantierte Latenzzeiten haben, wobei die Latenz unterschiedlich groß sein kann. Entscheidend ist, dass eine obere Schranke für die Latenz eingehalten werden kann.

Gegenwärtig sind unterliegende Gerätenetzwerke derart zu dimensionieren, dass die jeweils geforderten Datenfluss-Qualitäten zumindest näherungsweise erreicht werden können. Es sei angemerkt dass für gewisse Qualitäten, wie z.b. Latenzen, eine Dimensionierung nicht möglich ist, um die geforderte Qualität zu erreichen. Somit ist dies nicht in jedem einzelnen Anwendungsfall möglich, insbesondere nicht in heterogenen Gerätenetzwerken.

Es ist vor diesem Hintergrund des Standes der Technik Aufgabe der Erfindung, ein verbessertes Verfahren zum Betreiben von datenzentrischen Applikationen, insbesondere mit Ende-zu-Ende-Gewährleistung von Qualitäten, in einem Gerätenetzwerk anzugeben. Zudem ist es Aufgabe der Erfindung, ein verbessertes Computerprogramm zur Durchführung eines solchen verbesserten Verfahrens zu schaffen.

Diese Aufgabe der Erfindung wird mit einem Verfahren zum Betreiben von datenzentrischen Applikationen in einem Gerätenetzwerk mit den in Anspruch 1 angegebenen Merkmalen sowie mit einem Computerprogramm mit den in Anspruch 11 angegebenen Merkmalen gelöst. Bevorzugte Weiterbildungen der Erfindung sind in den zugehörigen Unteransprüchen, der nachfolgenden Beschreibung und der Zeichnung angegeben.

Bei dem erfindungsgemäßen Verfahren zum Betreiben von datenzentrischen Applikationen in einem Gerätenetzwerk werden Datenflüsse der einen oder mehreren datenzentrischen Applikationen mittels einer Zuordnung auf Datenflüsse zwischen Geräten des Gerätenetzwerks abgebildet und es werden abhängig von Anforderungen an die Datenflüsse der einen oder mehreren datenzentrischen Applikationen Anforderungen an die Datenflüsse zwischen den Geräten des Gerätenetzwerks festgelegt und Geräte, d. h. eines, mehrere oder sämtliche der Geräte, des Gerätenetzwerks werden zur Gewährleistung der Anforderungen an die Datenflüsse zwischen den Geräten konfiguriert und mittels der konfigurierten Geräte wird oder werden die eine oder mehrere datenzentrischen Applikationen betrieben.

Mittels des erfindungsgemäßen Verfahrens können Datenfluss-Anforderungen, insbesondere Datenfluss-Qualitäten, auf der Ebene von einer oder mehrerer Applikationen mittels datenzentrischer broker-loser Middleware zwischen den beteiligten Endpunkten garantiert werden. Dazu wird eine Softwarespezifische Komponente auf der Ebene der Geräte des Gerätenetzwerks herangezogen und der dort ablaufende Datenfluss zwischen den Geräten konfiguriert. Erfindungsgemäß wird also ein datenzentrisches Kommunikationsprotokoll genutzt, welches über die Software-Komponente konfiguriert und/oder mit anderen Protokollen in Verbindung gebracht wird. Auch werden über die Software-Komponente die Geräte so konfiguriert, dass sie zeit-kritische Datenflüsse erkennen und unterschiedlich priorisieren, um alle Anforderungen des datenzentrischen Standards der Anwendungsebene, d. h. der Applikationen, zu erfüllen.

Besonders vorteilhaft können mittels des erfindungsgemäßen Verfahrens Anforderungen an die Datenflüsse der einen oder mehreren datenzentrischen Applikationen garantiert werden. Auf diese Weise ist es insbesondere nicht erforderlich, das unterliegende Gerätenetzwerk übermäßig groß zu dimensionieren.

Das erfindungsgemäße Verfahren erreicht die Lösung des einleitend dargestellten Problems insbesondere mittels folgender Schritte:

Die datenzentrischen Applikationen werden in datensendende Endpunkte und datenempfangende Endpunkte aufgeteilt, und übermitteln die den Datenfluss kennzeichnenden und erforderlichen Parameter der software-gestützten Komponente. Solche Parameter sind insbesondere die Größe und die Frequenz des Datenaustauschs der Applikationen und/oder anderer Qualitäten des Datenflusses.

Die Erfordernisse der datenzentrischen Applikation, d. h. die Anforderungen an die Datenflüsse der Applikation, werden mit der existierenden Konfiguration der vorhandenen Netzwerkinfrastruktur verglichen, um zu berechnen, ob die vorhandene Konfiguration und der angeforderte Zeitplan der Kommunikation der Applikationen, also der Anforderungen an die Datenflüsse der Applikation, eingehalten werden kann.

Das vorhandene Gerätenetzwerk, insbesondere dessen Netzwerkinfrastruktur, muss die notwendige Parametrierung bereitstellen, damit die geforderten Kommunikationsvorgänge der datenzentrischen Applikationen realisiert werden können.

Der datenzentrische Datenverkehr wird nachfolgend gemäß dem Zeitplan unter Benutzung der jeweiligen Konfiguration eingeleitet.

Bevorzugt werden bei dem erfindungsgemäßen Verfahren Ressourcen des Gerätenetzwerks für die Datenflüsse zwischen den Geräten des Gerätenetzwerks ermittelt und es wird oder werden bevorzugt die eine oder mehreren datenzentrischen Applikationen abhängig von den Ressourcen konfiguriert. Auf diese Weise können diejenigen Ressourcen des Gerätenetzwerks, welche die Anforderungen an den Datenfluss erfüllen können, herangezogen werden und für die Umsetzung des Datenaustauschs mit Erfüllung der geforderten Qualitäten konfiguriert werden.

Geeigneterweise ist oder sind bei dem erfindungsgemäßen Verfahren die eine oder mehreren Applikationen mittels eines brokerlosen Publish-Subscribe-Protokolls realisiert. Geeigneterweise sind oder werden bei dem Verfahren gemäß der Erfindung die eine oder mehreren datenzentrischen Applikationen mittels des DDS-Standards und dessen standardisierten Protokolls, folgend abgekürzt als DDS-Protokoll, realisiert. Das DDS-Protokoll kann in an sich bekannter Weise als datenzentrische Middleware zur Konfiguration der Datenfluss-Qualität herangezogen werden.

Bei dem erfindungsgemäßen Verfahren sind oder werden bevorzugt die Datenflüsse des Gerätenetzwerks mittels des TSN-Standards, im Folgenden als TSN bezeichnet, realisiert. Mittels TSN können Datenfluss-Qualitäten, wie insbesondere Latenzen oder eine Zuverlässigkeit, der Datenflüsse des Gerätenetzwerks, realisiert werden. Vorliegend können auf der Ebene der software-Komponente insbesondere TSN-Talker und TSN-Listener herangezogen werden, auf welche die datensendenden Endpunkte und die datenempfangenden Endpunkte abgebildet, d. h. gemappt, werden.

Bei dem Verfahren gemäß der Erfindung werden die Datenflüsse vorzugsweise mittels, d. h. insbesondere über, Bridges realisiert und einige der oder die Bridge und/oder die mittels der Bridges miteinander über den Datenstrom verbundenen Geräte werden konfiguriert. Bridges realisieren in an sich bekannter Weise Datenflüsse in Gerätenetzwerken und kommen insbesondere zur Realisierung des TSN-Standards regelmäßig zum Einsatz.

Bei dem erfindungsgemäßen Verfahren umfassen die Anforderungen an die Datenflüsse der einen oder mehreren datenzentrischen Applikationen bevorzugt zumindest eine Datenfluss-Qualität. Solche Datenfluss-Qualitäten werden auch als "Quality of Service" bezeichnet. Erfindungsgemäß können also die Anforderungen an die Datenfluss-Qualität datenzentrischer Applikationen bei der Konfiguration des Gerätenetzwerks berücksichtigt werden, sodass das Gerätenetzwerk die beabsichtigte Datenfluss-Qualität realisieren kann.

Zweckmäßig umfasst bei dem erfindungsgemäßen Verfahren die Datenfluss-Qualität zumindest eine Latenz und/oder eine Zuverlässigkeit des jeweiligen Datenflusses. Gerade die Latenz und die Zuverlässigkeit bilden wichtige Datenfluss-Qualitäten, welche die Anforderungen an den Datenfluss sehr spezifisch charakterisieren. So müssen Steuersignale regelmäßig zuverlässig übertragen werden, wobei eine geringe Latenz wünschenswert ist. Alarmsignale hingegen erlauben eine im Vergleich zu Steuerungssignalen größere Latenz und weisen regelmäßig eine geringere Kritikalität auf, sodass die Zuverlässigkeit gegenüber Steuerungssignalen oft herabgesetzt sein darf.

Geeigneterweise umfassen bei dem erfindungsgemäßen Verfahren die Anforderungen an die Datenflüsse zumindest die Größe der jeweiligen Datenflüsse und/oder eine Frequenz der Datenflüsse. So können Alarmsignale im Vergleich zu insbesondere kontinuierlich übermittelten Steuerungssignalen deutlich sporadischer auftreten, können aber im Alarmfall, insbesondere bei einem Alarmschwall, kurzfristig eine größere Bandbreite erfordern als Steuerungssignale.

Vorzugsweise ist das erfindungsgemäße Verfahren computerimplementiert. D. h., das erfindungsgemäße Verfahren läuft mittels eines von einem Rechner ausgeführten Computerprogramms ab.

Das erfindungsgemäße Computerprogrammprodukt ist zur Ausführung der Schritte des erfindungsgemäßen Verfahrens wie zuvor beschrieben ausgebildet, wenn das Computerprogrammprodukt auf einem Computer läuft. Mittels des erfindungsgemäßen Computerprogrammprodukts lassen sich also dieselben Vorteile erzielen, wie sie bereits hinsichtlich des erfindungsgemäßen Verfahrens beschrieben worden sind.

Nachfolgend wird die Erfindung anhand in der Zeichnung dargestellter Ausführungsbeispiele näher erläutert.

Es zeigen:

Fig. 1    ein gekoppeltes Gerätenetzwerk mit einer Netzwerkonfiguration zur datenzentrischen Kommunikation schematisch in einer diagrammatischen Darstellung,

Fig. 2    ein Nachrichten-Format zur datenzentrischen Kommunikation im gekoppelten Gerätenetzwerk gemäß Fig. 1 schematisch in einer diagrammatischen Darstellung sowie

Fig. 3    eine zum Nachrichten-Format gemäß Fig. 2 alternatives Nachrichten-Format zur datenzentrischen Kommunikation im gekoppelten Gerätenetzwerk gemäß Fig. 1 schematisch in einer diagrammatischen Darstellung.

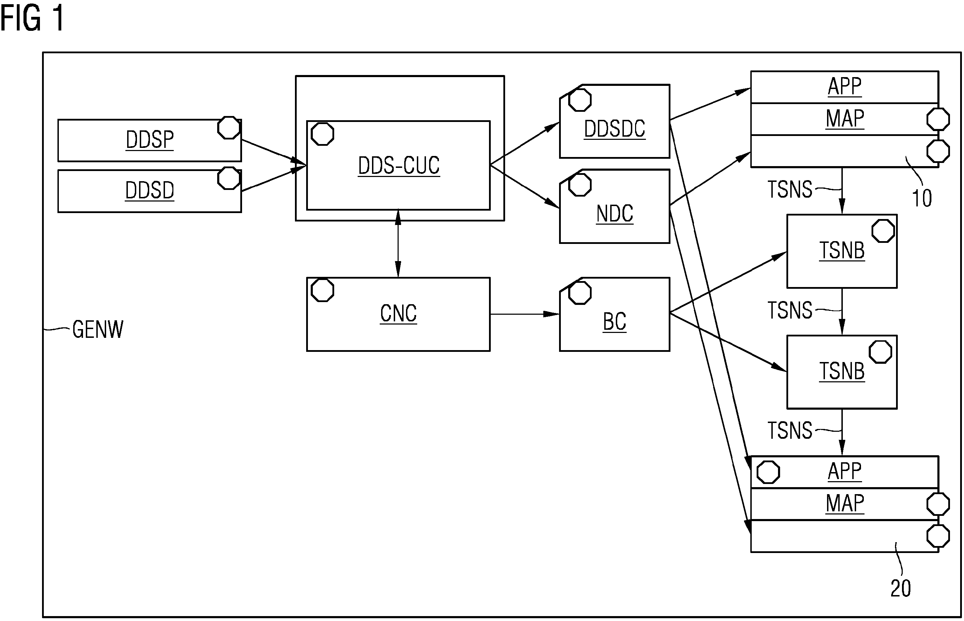

Das in Fig. 1 dargestellte gekoppelte Gerätenetzwerk GENW weist eine Anzahl von Knoten auf, welche datenversendende Knoten 10 und datenempfangende Knoten 20 umfassen.

Die datenversendenden Knoten 10 und die datenempfangenden Knoten 20 sind ausgebildet für zeitkritische Netzwerkkommunikation, hier für den Ethernet-Standard TSN, d. h. für das *"Time Sensitive Networking"* .

In dem gekoppelten Gerätenetzwerk GENW wird ein datenzentrisches Systemeingerichtet, im vorliegenden Fall das DDS-Protokoll DDSP. Das DSS-Protokoll DDSP ist ausgebildet, in an sich bekannter Weise Topics und Endpunkte sowie Datenfluss-Qualitäten und Kommunikationsdomänen, etwa unter Verwendung von XML, einzurichten, d. h. ein DDS-System zu bilden. Zusätzlich werden im gekoppelten Gerätenetzwerk Applikationen APP eingerichtet, welche das Publizieren und das Abonnieren von Topics auf Basis des DDS-Designs unternehmen.

Das DDS-System wird derart im gekoppelten Gerätenetzwerk GENW eingerichtet, dass diejenigen Endpunkte, welche Topics abonnieren, auf datenempfangende Knoten 20 abgebildet werden. Endpunkte hingegen, welche Topics publizieren, werden auf datenversendende Knoten 10 abgebildet. Entsprechend dieser Abbildung wird ein Deployment DDSD der Applikationen APP auf datenversendenden Knoten 10 und datenempfangenden Knoten 20 im System spezifiziert, d. h. es wird zugeordnet, welche publizierenden Endpunkte und welche abonnierenden Endpunkte als datenversendende Knoten 10 und als datenempfangende Knoten 20 fungieren. Zudem wird mittels XML-Dateien spezifiziert, wie oft Daten zwischen den Endpunkten und somit zwischen den datenversendenden Knoten 10 und den datenempfangenden Knoten 20 ausgetauscht werden, sowie wie sich der Payload der ausgetauschten Daten bemisst.

Zur Konfiguration des DDS-Systems auf den datenversendenden Knoten 10 und den datenempfangenden Knoten 20 wird eine zentralisierte Konfigurationseinheit DDS-CUC herangezogen, die Informationen über das Design und das Deployment DDSD des DDS-Systems sammelt und bereithält. Die zentralisierte Konfigurationseinheit DDS-CUC sammelt Informationen über diejenigen Applikationen, welche zuständig sind für das Senden und Empfangen von Daten. Zu diesen Informationen zählen vorliegend insbesondere Kommunikationsanforderungen der Applikationen wie die erforderlichen Datenfluss-Qualitäten, d. h. den erforderlichen Quality-of-Service, die erforderliche Größe und die angestrebte Frequenz beim Austausch von Daten. Zusätzlich sammelt die zentralisierte Konfigurationseinheit DDS-CUC Informationen über diejenigen Knoten des Gerätenetzwerks, auf welchen die Applikationen laufen, insbesondere eine IP-Adresse oder eine MAC-Adresse oder einen Hostname.

Die zentralisierte Konfigurationseinheit DDS-CUC analysiert diese Informationen und leitet mittels des YANG-Modells aus den Kommunikationsanforderungen die Anforderungen an die Konfiguration der Geräte des Gerätenetzwerks GENW gemäß dem Ethernet-Protokoll, hier die Anforderungen an die Konfiguration für 802.1Qc* bzw. 802.1CB oder 802.1AS-2020, ab und ermittelt eine entsprechende Konfiguration für die TSN-Infrastruktur. Die resultierende Konfiguration für die Geräte des Gerätenetzwerks GENW bildet eine Gerätekonfiguration NDC.

Diese Konfiguration wird anschließend zum Beispiel über restconf oder netconf zu einer zentralisierten Netzwerkkomponente CNC übermittelt. Die zentralisierte Netzwerkkomponente CNC berechnet für die TSN-Knoten des Gerätenetzwerks Anforderungen, Prioritäten und VLAN-IDs und übermittelt diese als Bridge-Konfiguration BC an die TSN-Bridges TSNB.

Wenn die Anforderungen an das Gerätenetzwerk erfüllt werden können und die erforderlichen Ressourcen für diese Anforderungen verfügbar sind, dann legt die zentralisierte Netzwerckomponente CNC fest, wie viele Datenflüsse in Gestalt von TSN-Streams TSNS benutzt werden müssen und wie die einzelnen TSN-Streams TSNS identifiziert werden.

Diese Informationen über die TSN-Streams TSNS liefert die zentralisierte Netzwerkkomponente CNC mittels der Bridge-Konfiguration BC an die TSN-Bridges TSNB, um Ressourcen tatsächlich entsprechend den Anforderungen allokieren zu lassen.

Zusätzlich wird diese Information über die TSN-Streams TSNS an die zentralisierte Konfigurationseinheit DDS-CUC geliefert, die diese dann zurückübersetzt in eine Nachjustierung des DDS-Systems, z.B. eine Anpassung der Quality-of-Service. Zum Beispiel, wie das DDS-System hinsichtlich der Ports und der Datenfluss-Qualitätsowie nachzukonfigurieren ist damit die Kommunikation der Applikationsknoten (10, 20) über TSN möglich wird. Diese nachkonfigurierte Konfiguration des DDS-Systems erfolgt mittels der DDS-Deployment-Konfiguration DDSDC.

Die zentralisierte Konfigurationseinheit DDS-CUC und die zentralisierte Netzwerkkomponente CNC können wie in Fig. 1 dargestellt als separate Dienstanwendungen laufen. Sie können aber alternativ auch kombiniert in einem Software-Artefakt laufen. In weiteren, nicht eigens dargestellten Ausführungsbeispielen kann die zentrale Konfigurationseinheit DDS-CUC als Teilkomponente einer herkömmlichen zentralen Konfigurationseinheit realisiert sein.

Nach der Einrichtung des DDS-Systems auf dem Gerätenetzwerk wird zusätzlich sichergestellt, dass der DDS-Datenverkehr wie konfiguriert gemäß der TSN-Konfiguration, z.B. hinsichtlich Zeitrahmen, läuft. Das DDS-System benutzt zur Interoperabilität das DDSI-RTPS-Interoperability-Protokoll. RTSP ist transportunabhängig definiert und kann über TCP oder UDP-Datagramme oder Shared Memory (SHMEM) oder weitere Kommunikationsprotokolle benutzt werden.

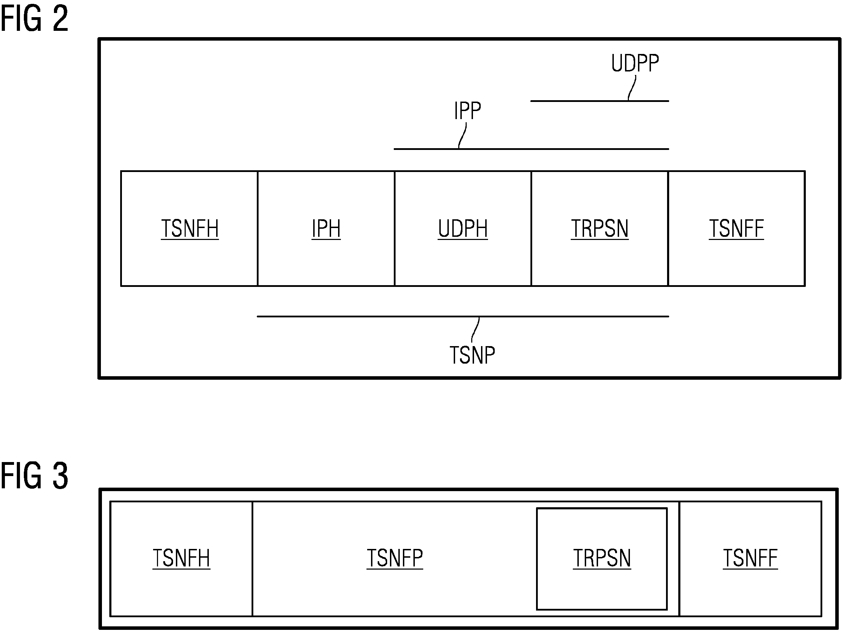

Zur Realisierung des DDS-TSN-Datenverkehrs kann dieser wie in Fig. 2 dargestellt mittels einer Middleware MAP, welche auf den datenversendenden Knoten 10 und den datenempfangenden Knoten 20 läuft, entweder direkt

gekapselt mittels unmodifiziertem UDP-Transport UDP/IP übertragen werden, indem RTPS-Nachrichten in andere Payloads integriert werden: Dazu wird eine RTPS-Nachricht TRPSN, die einen UDP-Payload UDPP bildet, mit einem UDP-Header UDPH versehen und bildet gemeinsam mit diesem einen IP-Payload IPP aus. Der IP-Payload IPP wiederum wird mit einem IP-Header IPH versehen und bildet mit diesem IP-Header IPH gemeinsam einem TSN-Payload TSNP aus. Gemeinsam mit einem TSN-Frame-Header TSNFH und einem TSN-Frame-Footer TSNFF bildet der TSN-Payload TSNP die gesamte gekapselte DDS-TSN-Nachrichtenstruktur aus.

Alternativ können wie in Fig. 3 dargestellt RTPS-Daten in Gestalt von RTPS-Nachrichten RTPSN direkt als TSN-Frame-Payload TSNFP, gekapselt mit einem TSN-Frame-Header TSNFH und einem TSN-Frame-Footer TSNFF, in TSN-Frames integriert werden ohne Einbeziehung des IP-Stacks.

Aus Sicht des TSN gibt es strukturell keinen Unterschied zu herkömmlichen TSN-Nachrichtenpaketen. Die DDS-Daten sind sozusagen verpackt als Subinformation im TSN-Frame. Zum Transport des TSN-Frames wird ein 802.1Q-Tag herangezogen, welches den zum TSN-Frame zugehörigen TSN-Stream identifiziert. Generell werden TSN-Streams über ein VLAN-Tag und eine Ziel-MAC-Adresse identifiziert.

Mittels des VLAN-Tags und der Ziel-MAC-Adresse kann der TSN-Datenverkehr von TSN-Bridges TNSB im Netzwerk mit einer geeigneten Datenverkehrsklasse, d. h. mit einer geeigneten Priorität, geleitet werden. Die TSN-Bridges TNSB werden also so konfiguriert, dass diese den TSN-Datenverkehr anhand des VLAN-Tags und anhand der Ziel-MAC-Adresse priorisieren.

Um dies zu gewährleisten, werden die DDS-Streams richtig konfiguriert. Die TSN-Frames, die DDS-Datenverkehr transportieren sollen, erhalten dazu eindeutige VLAN-Tags. Dies wird wie folgt realisiert: VLAN-Tags werden in einem ersten Ausführungsbeispiel statisch abgeleitet von der DDS-TSN Konfiguration (NDC).

In einem weiteren Ausführungsbeispiel werden die VLAN-Tags über einen Abbildungsprozess zwischen den datenversendenden Knoten 10 und den Daten publizierenden Endpunkten des DDS-Protokolls sowie zwischen den datenempfangenden Knoten 20 und den Daten abonnierenden Endpunkten des DDS-Systems zugeordnet, im dargestellten Ausführungsbeispiel unter Benutzung von 802.1CB, 802.1Q*, 802.1AS-2020.

Die VLAN-Tags können auch über dedizierte virtuelle Netzwerkschnittstellen (NICs) gesetzt werden.

Für den DDS-Datenverkehr werden dabei Prioritäten, d. h. Datenverkehrsklassen, ermittelt und dem jeweiligen DDS-Datenverkehr zugeordnet. Zur Zuordnung der jeweiligen Priorität wird dabei die Priorität mittels eines 3-Bit-PCP, d. h. eines 3-Bit-Priority-Code-Points, in einem TCI-Feld des Ethernet-Frames codiert. Somit kann die Priorisierungs- und Nachrichtenformungskomponente der TSN-Hardware (credit based traffic shaper) des Gerätenetzwerks den DDS-Datenverkehr korrekt in die jeweiligen TSN-Warteschlangen einreihen und zugehörige Prioritäten berücksichtigen um also eine dem Datenstrom entsprechende Zeitplanung zu gewährleisten.

Nachfolgend wird beispielhaft eine Abbildung MAP von drei verschiedenen Datenflüssen des industriellen Internets der Dinge auf das DDS-Protokoll erläutert, so wie oben beschrieben:
Steuerungsereignisse: Diese treten azyklisch oder sporadisch auf und können beispielsweise mit Latenzen von 10 ms bis 50 ms ausreichend verarbeitet werden. Der Payload beträgt wenige hundert Bytes, wobei die Kritikalität von Steuerungsereignissen regelmäßig hoch ist. Steuerungsereignisse weisen eine hohe Priorität auf und müssen eine Filterung auf Datenstrom-Ebene erlauben. Da Steuerungsereignisse sporadisch sind, wird im vorliegenden Ausführungsbeispiel eine Obergrenze für die Bandbreite von Steuerungsereignissen konfiguriert. Vorliegend wird eine Netzwerk-Konfigurations-Funktion herangezogen, die Informationen von Anwendungen über die Arten des Datenverkehrs erhält, um eine Filterung auf Datenstromebene zu unterstützen. Es ist Verkehrsklasse 4 zu wählen.

Alarmereignisse: Diese treten azyklisch oder sporadisch auf und erlauben im Gegensatz zu Steuerungsereignissen eine Latenz von bis zu 1 Sekunde. Allerdings kann der Payload eine Größe von bis zu 1MB aufweisen und die Kritikalität ist von mittlerer Größe. Je nach Anwendungsfall kann Datenverlust erlaubt sein. Ein Alarm-Schwall, d. h. mehrere tausend gleichzeitige Alarmereignisse, muss möglich sein. Daher ist eine hohe Priorität mit der Verkehrsklasse 3 erforderlich, da etwa im Falle eines Alarmschwalls mehr Bandbreite erforderlich sein könnte als reserviert ist. Eine Uhrensynchronisation ist notwendig für Zeitstempel und zum Erfassen von Sequenzen von Events.

Eine Filterung auf Datenstrom-Ebene sowie die Durchsetzung von entsprechenden Sicherheitsrichtlinien ist notwendig, um im Alarmschwall-Fall die Datenrate anderer Datenflüsse zu limitieren und deren Prioritäten zu reduzieren oder um sogar Daten im Einzelfall fortfallen zu lassen, d. h. zu ignorieren. Dazu ist zusätzlich eine software-basierte Netzwerk-Konfigurations-Funktion vorhanden, welche Informationen von Applikationen über die Datenverkehrsart erhält, um eine Filterung von Datenflüssen zu unterstützen, d. h. ein sogenanntes Per-stream-Filtering-and-Policing vorzunehmen.

Zustellung von Daten bzw. Datenflüssen nach bester Anstrengung (best effort): Diese fallen azyklisch oder sporadisch an und weisen allgemein zunächst keine untere Schranke für die Latenz auf. Der Payload kann in einer Größe von vorliegend bis zu 2MB liegen, wobei eine geringe Kritikalität angenommen wird. Mittels dieser Voreinstellung können Applikationsdaten im Allgemeinfall transportiert werden. Es ist Verkehrsklasse 0 zu wählen.

Eine Zuordnung des jeweiligen Datenflusses von Applikationen im Umfeld des Internets der Dinge mit den Datenflüssen des Ethernets auf TSN-Ebene zeigt die nachfolgende Tabelle.

Tabelle: Industrie 4.0 Datenfluss Beispiele mit IEEE 802.1* Mapping

| Datenfluss | | | | | |
|---|---|---|---|---|---|
| | 802.1Q | Traffic dass | 802.1AS-Rev | 802.1Qci | Reservation & Scheduling |
| Control events | X | 4 | X | X | X |
| Alarm events | X | 3 | | X | |
| Best efforts | X | 0 | | | |

Die Software-Implementierung, etwa hinsichtlich der Datenverkehrsklassen, erfolgt im einfachsten Falle über eine Mapping-Funktionalität. Im Pseudocode kann ein solches Mapping etwa wie folgt anhand eines Beispiels für einen Datenstrom eines Steuerungsereignisses beschrieben realisiert sein:

If
(DDS.latencybudget < 50ms && DDS.latencybudget > 10ms) then

```
PCP = 100;
```

**Patentansprüche**

1.  Verfahren zum Betreiben von datenzentrischen Applikationen (APP) in einem Gerätenetzwerk (GENW), bei welchem Datenflüsse der einen oder mehreren datenzentrischen Applikationen (APP) mittels einer Zuordnung auf Datenflüsse (TSNS) zwischen den Geräten (10, 20) des Gerätenetzwerks (GENW) abgebildet werden und bei welchem abhängig von den Anforderungen an die Datenflüsse der einen oder mehreren datenzentrischen Applikationen (APP) Anforderungen an die Datenflüsse zwischen den Geräte (10, 20) des Gerätenetzwerks (GENW) festgelegt werden und Geräte (10, 20) des Gerätenetzwerks zur Erfüllung der Anforderungen konfiguriert werden und mittels der konfigurierten Geräte die eine oder mehreren datenzentrischen Applikationen (APP) betrieben werden.

2.  Verfahren nach einem der vorehrgehenden Ansprüche, bei welchem Ressourcen (TSNB) des Gerätenetzwerks (GENW) für die Datenflüsse (TSNS) zwischen den Geräten (10, 20) des Gerätenetzwerks (GENW) ermittelt werden und die eine oder mehreren datenzentrischen Applikationen (APP) abhängig von den Ressourcen (TSNB) konfiguriert werden.

3.  Verfahren nach einem der vorhergehenden Ansprüche, bei welchem die eine oder mehreren datenzentrischen Applikationen (APP) mittels des DDS-Protokolls (DDSP) realisiert sind oder werden.

4.  Verfahren nach einem der vorhergehenden Ansprüche, bei welchem die Datenflüsse (TSNS) zwischen den Geräten (10, 20) des Gerätenetzwerks (GENW) mittels des TSN-Standards (TSNP) realisiert sind oder werden.

5.  Verfahren nach einem der vorhergehenden Ansprüche, bei welchem die Datenflüsse mittels Bridges (TSNB) realisiert werden und die Bridges (TSNB) und/oder die mittels der Bridges (TSNB) miteinander über den Datenstrom (TSNS) verbundenen Geräte (10, 20) konfiguriert werden.

6.  Verfahren nach einem der vorhergehenden Ansprüche, bei welchem die Anforderungen an die Datenflüsse (TSNS) der einen oder mehreren datenzentrischen Applikationen (APP) zumindest eine Datenfluss-Qualität umfassen.

7.  Verfahren nach einem der vorhergehenden Ansprüche, bei welchem die Datenfluss-Qualität zumindest eine Latenz umfasst.

8.  Verfahren nach einem der vorhergehenden Ansprüche, bei welchem die Datenfluss-Qualität zumindest eine Zuverlässigkeit umfasst.

9. Verfahren nach einem der vorhergehenden Ansprüche, bei welchem die Anforderungen an die Datenflüsse (TSNS) zumindest die Größe der jeweiligen Datenflüsse (TSNS) umfassen.

10. Verfahren nach einem der vorhergehenden Ansprüche, bei welchem die Anforderungen an die Datenflüsse (TSNS) zumindest eine Frequenz der Datenflüsse (TSNS) umfassen.

11. Computerprogrammprodukt, ausgebildet zur Ausführung der Schritte eines Verfahrens gemäß einem der vorhergehenden Ansprüche dann, wenn das Computerprogrammprodukt auf einem Computer läuft.

# FIG 1

EP 4 394 599 A1

FIG 2

UDPP

IPP

| TSNFH | IPH | UDPH | TRPSN | TSNFF |

TSNP

FIG 3

| TSNFH | TSNFP | TRPSN | TSNFF |

EP 4 394 599 A1

Europäisches
Patentamt

European
Patent Office

Office européen
des brevets

## EUROPÄISCHER RECHERCHENBERICHT

**Nummer der Anmeldung**

**EP 23 15 0010**

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2011/295923 A1 (DE CAMPOS RUIZ ALEJANDRO [US] ET AL) 1. Dezember 2011 (2011-12-01) * Absatz [0005] – Absätze [0012], [0031]; Abbildung 1 * ----- | 1-11 | INV. G06F9/54 |
| A | AGARWAL TANUSHREE ET AL: "Multi-Level Time-Sensitive Networking (TSN) Using the Data Distribution Services (DDS) for Synchronized Three-Phase Measurement Data Transfer", IEEE ACCESS, Bd. 7, 4. September 2019 (2019-09-04), Seiten 131407-131417, XP011747361, DOI: 10.1109/ACCESS.2019.2939497 [gefunden am 2019-09-23] * das ganze Dokument * ----- | 1-11 | |

**RECHERCHIERTE SACHGEBIETE (IPC)**

G06F

Der vorliegende Recherchenbericht wurde für alle Patentansprüche erstellt

| Recherchenort | Abschlußdatum der Recherche | Prüfer |
|---|---|---|
| Den Haag | 15. Mai 2023 | Mühlenbrock, Martin |

KATEGORIE DER GENANNTEN DOKUMENTE

X : von besonderer Bedeutung allein betrachtet
Y : von besonderer Bedeutung in Verbindung mit einer
   anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
   nach dem Anmeldedatum veröffentlicht worden ist
D : in der Anmeldung angeführtes Dokument
L : aus anderen Gründen angeführtes Dokument
...........................................................................................
& : Mitglied der gleichen Patentfamilie, übereinstimmendes
   Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 23 15 0010

In diesem Anhang sind die Mitglieder der Patentfamilien der im obengenannten europäischen Recherchenbericht angeführten
Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

15-05-2023

| Im Recherchenbericht angeführtes Patentdokument | Datum der Veröffentlichung | Mitglied(er) der Patentfamilie | Datum der Veröffentlichung |
|---|---|---|---|
| US 2011295923 A1 | 01-12-2011 | KEINE | |

Für nähere Einzelheiten zu diesem Anhang : siehe Amtsblatt des Europäischen Patentamts, Nr.12/82

EPO FORM P0461